# EUROPÄISCHE PATENTSCHRIFT

(11) **EP 2 634 437 B1**
(45) Veröffentlichungstag und Bekanntmachung des Hinweises auf die Patenterteilung: **25.11.2015**
(21) Anmeldenummer: 13156240.7
(22) Anmeldetag: 21.02.2013
(51) Int. Cl.: F16B 5/04, F16B 19/08, F16B 37/06

(54) **Einstanzelement, Vormontagebauteil, Zusammenbauteil und Verfahren**
Punching element, preassembly component, assembly component and method
Élément d'ajourage, composant de prémontage, composant d'assemblage et procédé

(30) Priorität: 29.02.2012 DE 102012003972
(43) Veröffentlichungstag der Anmeldung: 04.09.2013
(73) Patentinhaber: Profil Verbindungstechnik GmbH & Co. KG, 61381 Friedrichsdorf (DE)
(72) Erfinder: Diehl, Oliver, 61350 Bad Homburg v.d.H. (DE); Humpert, Richard, 61231 Bad Nauheim (DE)
(74) Vertreter: Manitz, Finsterwald & Partner GbR

(56) Entgegenhaltungen:
- EP-A2- 2 302 234
- WO-A1-02/086337
- WO-A2-2006/119401
- DE-A1- 1 400 934
- DE-A1- 19 710 246
- DE-T2- 69 533 969
- US-A- 4 525 912

## Beschreibung

Die vorliegende Anmeldung betrifft ein Einstanzelement mit einem hohlen Kopfteil größerer Querabmessung, mit einem hohlen Schaftteil kleinerer Querabmessung, der von einer Seite des Kopfteils weg ragt, wobei eine ringförmige Blechanlagefläche auf der genannten Seite des Kopfteils ausgebildet ist und den Schaftteil umgibt, ein Vormontagebauteil bestehend aus dem Einstanzelement und zumindest einem Blechteil, ein Zusammenbauteil bestehend aus dem Vormontagebauteil und einem weiteren Blechteil sowie ein Verfahren zum Herstellen des Zusammenbauteils.

Ein Einstanzelement dieser Art ist aus der EP-A-23022344 bekannt. Es ist zum Einstanzen in ein einziges dickes Blechteil gedacht und ist mit mehreren Rippen am Außenumfang des Schaftteils versehen, die sich in axialer Richtung entlang des Schaftteils von der Blechanlagefläche über etwa die Hälfte der Länge des Schaftteils erstrecken.

Darüber hinaus ist ein Nietelement aus der EP-A-1806508 bekannt, das mit einem Nietabschnitt mit sich in Längsrichtung erstreckenden Verdrehsicherungsrippen ausgestattet ist, die sich über die volle axiale Länge des Nietabschnitts erstrecken. Man unterscheidet allerdings auf dem Gebiet der Funktionselemente bzw. der Verbindungselemente streng zwischen Einpresselementen einerseits und Nietelementen andererseits, und zwar deshalb, weil Einpresselemente bei der Anbringung an ein Blechteil nicht absichtlich verformt werden, Nietelemente dagegen absichtlich verformt werden, um das Nietbördel auszubilden, das für das Zusammenbauteil bestehend aus einem Nietelement und einem Blechteil wesentlich ist. Die Auslegung der beiden Arten von Funktionselementen bzw. Verbindungselementen ist somit grundlegend verschieden.

Ein weiteres Nietelement ist aus der EP-A-2177776 bekannt. Dieses Element ist auch zur Anbringung an ein einziges vorgelochtes dickes Blechteil gedacht. Sein Schaftteil hat einen dickwandigen hohlen Abschnitt und am freien Ende einen dünnwandigen hohlen Nietabschnitt. Der dickwandige Abschnitt ist mit sich in Längsrichtung erstreckenden Rippen versehen, die sich im Wesentlichen über die volle Länge des dickwandigen Abschnitts erstrecken, der Nietabschnitt ist aber nicht mit Rippen versehen.

Keine der oben beschriebenen Elemente ist für die Anbringung an ein erstes und ein zweites Blechteil gedacht oder dafür ausgelegt. In der Praxis, vor allem auf dem Gebiet des Karosseriebaus, kommen immer wieder Anwendungen vor, bei denen ein Funktionselement an ein erstes und an ein zweites Blechteil angebracht werden muss, wobei die Anbringung an das erste Blechteil an einer Stelle in einer Fabrik erfolgen kann, während die Anbringung an das zweite Blechteil an einer anderen Stelle in der gleichen Fabrik oder in einer anderen Fabrik erfolgt. Häufig werden die ersten Blechteile mit angebrachten Funktionselementen lose in Kisten von einer Stelle zur anderen transportiert und sind deshalb Erschütterungen und gegebenenfalls rauer Handhabung ausgesetzt, die zu einer Lockerung des Funktionselements im ersten Blechteil oder gar zu einem Auseinanderfallen der beiden Teilen führen kann, so dass sie für die Anbringung am zweiten Blechteil nicht mehr tauglich sind oder nur mit größerem Aufwand verwendbar sind. Gerade bei der Serienfertigung stellt dies ein erhebliches Problem dar.

Ein Beispiel für ein solches Zusammenbauteil ist die Anbringung von Scharnieren an Türholmen von Fahrzeugkarosserien. Die Türholme sind üblicherweise aus einem relativ dünnen Blech gefertigt, insbesondere dann, wenn sie ein Teil der Außenhaut des Fahrzeugs sind. Es ist dann bekannt, Mutterelemente an einem sogenannten Schiff anzubringen, das durch ein weiteres im Querschnitt häufig eine flache gebogene U-Form aufweisendes dickeres Blechteil gebildet ist, das zur Versteifung an den Türholm von der Innenseite angeschweißt wird. Bei der Auslegung der Türscharniere und der Anbringung an einen Türholm muss stets bedacht werden, dass eine relativ schwere Person mit beispielsweise 150 Kg Körpergewicht sich an den Türrahmen beim Ein- und Aussteigen abstützen kann, wodurch erhebliche Hebelkräfte vom Türholm aufgenommen werden müssen, ohne dass sich dieser verformt.

Die WO 02/086 337 A1, US 4,525,912 A und WO 2006/119401 A2 offenbaren jeweils ein Vormontagebauteil mit den Merkmalen des Oberbegriffs des Anspruchs 1.

Es wird ein Einstanzelement bereitgestellet, das besonders für die Anbringung an erste und zweite Blechteile gedacht ist, wobei die Anbindung an das erste Blechteil einerseits sicher ist, so dass eine Lockerung des Elements des ersten Blechteils nicht zu befürchten ist, und die Anbringung an ein zweites Blechteil problemlos erreicht werden kann, ohne auf eine besondere Orientierung des Elements achten zu müssen.

Die der vorliegenden Erfindung zugrundeliegende Aufgabe ist es, eine Vormontagebaueinheit bestehend aus dem Element und dem ersten Blechteil und ein fertiges Zusammenbauteil bestehend aus der Vormontagebaueinheit und einem zweiten Blechteil zu schaffen, die stabil und preisgünstig herstellbar sind, wie auch ein entsprechendes Herstellungsverfahren für das Zusammenbauteil. Zur Lösung dieser Aufgabe wird erfindungsgemäß ein Vormontagebauteil mit den in Anspruch 1 offenbarten Merkmalen vorgesehen.

An dieser Stelle soll betont werden, dass, wenn hier von einem ersten Blechteil und einem zweiten Blechteil die Rede ist, ein solches Blechteil mehrlagig ausgebildet werden kann, wobei die mehreren Lagen eines Blechteils beispielsweise aneinander geschweißt oder verklebt sein können. Zum Beispiel kann das erste Blechteil aus zwei oder mehreren aneinander geschweißten Blechteilen bestehen und das zweite Blechteil ebenso.

Insbesondere zeichnet sich das Einstanzelement dadurch aus, dass die Rippen sich von der ringförmigen Blechanlagefläche bis nahe an das freie Ende des Schaftteils erstrecken.

Wenn gesagt wird, dass sich die Rippen von der ringförmigen Blechanlagefläche bis nahe an das freie Ende des Schaftteils erstrecken, bedeutet dies, dass sie von der ringförmigen Blechanlagefläche oder nahe an der ringförmigen Blechanlagefläche sich über mindestens 80 % der gesamten Länge des Schaftteils erstrecken.

Dabei werden die Rippen vorzugsweise gleichmäßig verteilt um den Außenumfang des Schaftteils angeordnet.

Sowohl der Kopfteil als auch der Schaftteil sind vorzugsweise hohl ausgebildet, wobei ein Gewindezylinder im Kopfteil und im Schaftteil ausgebildet ist.

Eine alternative Ausbildung des Einstanzelements ist dem Unteranspruch 5 zu entnehmen.

Die erfindungsgemäße Vormontagebaueinheit umfasst zumindest ein erstes vorgelochtes Blechteil, in das zumindest ein Einstanzelement gemäß zumindest einer der vorstehenden Ausführungsformen mit seinem freien Ende voraus so weit im vorgelochten Blechteil eingepresst ist, dass ein Endteil des Schaftteils aus dem Blechteil herausragt und dass einige aber nicht alle der Längsrippen vom Endteil des Schaftteils voll oder teilweise weggeschabt und zu Materialnasen umgeformt sind, d.h. abgeschert und gestaucht wurden, wobei die Materialnasen radial in das Material des Blechteils voll oder teilweise eingreifen oder an dem Blechteil anliegen, wodurch das Blechteil zwischen den Nasen und der Blechanlagefläche eingeklemmt ist und die restlichen nicht weggeschabten Längsrippen noch am Endteil vorhanden sind.

Durch die Materialnasen wird somit das Einstanzelement formschlüssig und verdrehsicher am ersten Blechteil angebracht, und zwar derart, dass eine Verbindung entsteht, bei der eine Lockerung des Elements im ersten Blechteil oder gar eine unerwünschte Trennung der beiden Bauteile nicht zu befürchten ist. Wie später näher erläutert wird, muss bei der Herstellung der Vormontagebaueinheit weder auf eine besondere Drehposition des Elements noch auf eine entsprechende Drehposition der verwendeten Matrize geachtet werden.

Diese Vormontagebaueinheit kann dann mit einem zweiten nicht vorgelochten Blechteil zu einem erfindungsgemäßen Zusammenbauteil komplementiert werden, in dem das Endteil selbststanzend in das zweite Blechteil mit Ausbildung eines Loches im zweiten Blechteil eingebracht wird, wodurch die restlichen nicht weggeschabten Längsrippen, die noch am Endteil vorhanden sind, formschlüssig in Furchen des Lochrandes eingreifen, die durch das Einpressen der Vormontagebaueinheit entstehen.

Somit wird auch die Vormontagebaueinheit verdrehsicher und - bedingt durch die hohe Lochlaibung - auch auspresssicher am zweiten Blechteil angebracht.

Besonders günstig ist es, wenn eine Ringvertiefung in der dem ersten Blechteil abgewandten Seite des zweiten Blechteils vorgesehen ist, die das Endteil umgibt.

Hierdurch wird die Lochlaibung erhöht, wodurch auch der Auspresswiderstand erhöht wird.

Bei der Herstellung des Zusammenbauteils wird das Schaftteil mindestens im Bereich des Gewindes zumindest im Wesentlichen nicht verformt.

Das erfindungsgemäße Verfahren zum Herstellen eines Vormontagebauteils bestehend aus einem Blechteil und einem Einstanzelement der oben beschriebenen und im Anspruch 1 beanspruchten Art wird so durchgeführt, dass das Blechteil vorgelocht wird mit einem Lochdurchmesser, der dem Durchmesser des Schaftteils entspricht, dass das Blechteil auf einer eine Passage aufweisende Matrize abgestützt wird, die mindestens erste und zweite abwechselnde Bereiche um die Passage herum aufweist, wobei die ersten Bereiche einen Radius von der mittleren Längsachse des Einstanzelements aufweisen, der dem Radius des Schaftteils entspricht, und die zweiten Bereiche einen Radius von der mittleren Längsachse des Einstanzelements aufweisen, der dem Radius der Außenseiten der Längsrippen von der mittleren Längsachse des Einstanzelements entspricht.

Hierdurch werden einige, aber nicht alle der Längsrippen zu Materialnasen der oben beschriebenen Art umgeformt. Dabei spielt es keine Rolle, ob die ersten Bereiche eine oder zwei Längsrippen voll oder teilwiese treffen, da die verbleibenden Längsrippen am Endteil, sei es voll oder teilweise abgeschabte Längsrippen, für die verdrehsichere Anbringung an das zweite Blechteil ausreichen. Es soll nur eine unterschiedliche Zahl von Längsrippen und erste Bereiche und/oder eine unterschiedliche Winkelerstreckung der Längsrippen und der ersten Bereiche geben, damit nur einige der Längsrippen oder Teile davon von den ersten Bereichen weggeschabt werden. Üblicherweise werden weniger erste Bereiche als Längsrippen vorgesehen.

Ferner umfasst die vorliegende Erfindung ein Verfahren zum Herstellen eines Zusammenbauteils bestehend aus dem oben beschriebenen Vormontagebauteil und einem zweiten Blechteil, wobei das zweite nicht vorgelochte Blechteil auf einer Matrize abgestützt wird mit einer mittleren Passage mit einem Durchmesser entsprechend dem Grunddurchmesser des Endteils des Schaftteils des Einstanzelements und mit einer um die mittlere Passage herum angeordneten Ringnase, wobei durch Drücken der Vormontageeinheit mit dem Stirnende des Endteils voran gegen die der Matrize abgewandten Seite des zweiten Blechteils das Endteil mit Hilfe der Matrize ein Loch im zweiten Blechteil und einen Stanzbutzen erzeugt, und die Ringnase eine Ringvertiefung in der dem Kopfteil abgewandten Seite des zweiten Blechteils um das Endteil herum erzeugt.

Auch hier muss nicht auf eine besondere Orientierung der Vormontagebaueinheit oder der zweiten Matrize geachtet werden, da die verbleibenden Längsrippen oder Längsrippenteile am Endteil des Schaftteils nicht in Berührung mit der zweiten Matrize gelangen, zumal im installierten Zustand das freie Stirnende des Schaftteils nicht über die dem Kopfteil abgewandten Seite des zweiten Blechteils hinausragt, sondern vorzugsweise gegenüber dieser geringfügig zurückversetzt ist, beispielsweise um 0,02 mm. Die Erfindung wird nachfolgend anhand eines Ausführungsbeispiels und unter Bezugnahme auf die Zeichnungen näher erläutert, in denen zeigen:
- Fig. 1A - 1B: perspektivische Darstellungen eines Einstanzelements, aus denen die Formgebung des Elements von beiden Stirnseiten ersichtlich ist,

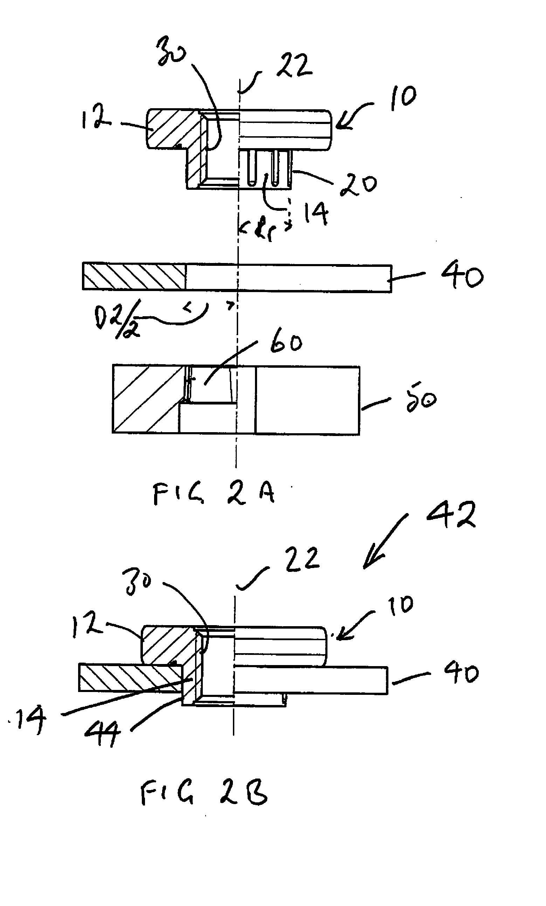

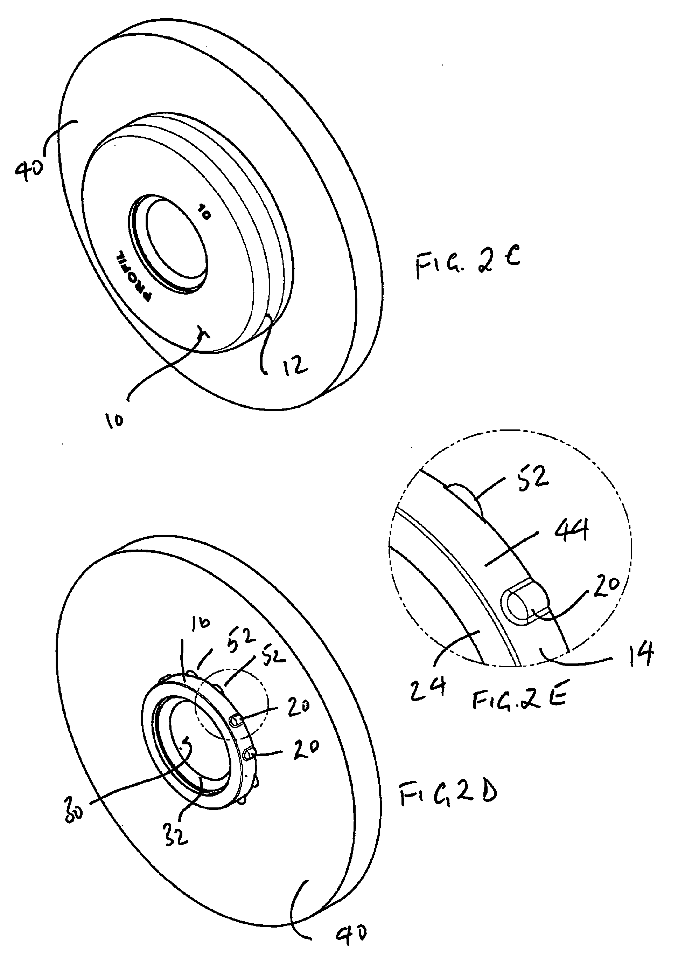

- Fig. 2A - 2E: Darstellungen, wie das Einstanzelement in ein erstes Blechteil eingebracht wird und wie die hierdurch gefertigte erfindungsgemäße Vormontageeinheit aussieht, wobei Fig. 2A das Einstanzelement oberhalb des vorgelochten ersten Blechteils mit darunterliegender Matrize zeigt, die Fig. 2B die fertige Vormontagebaueinheit in teilweise in Längsrichtung geschnittenem Zustand zeigt, die Fig. 2C und 2D perspektivischer Darstellungen der fertigen Vormontagebaueinheit gemäß Fig. 2B von beiden Seiten zeigen und die Fig. 2E eine vergrößerte Darstellung des eingekreisten Bereichs der Fig. 2D zeigt,
- Fig. 3A -3C: die in der Fig. 2A verwendete Matrize in einer perspektivischen Darstellung (Fig. 3A), in einer in Längsrichtung geschnittenen Ansicht (Fig. 3B) und in einer Stimansicht (Fig. 3C),
- Fig. 4A -4B: die Anbringung der erfindungsgemäßen Vormontagebaueinheit gemäß Fig. 2B bis 2E an ein zweites Bauteil mit Hilfe einer zweiten Matrize (Fig. 4A) zur Bildung eines erfindungsgemäßen Zusammenbauteils (Fig. 4B).

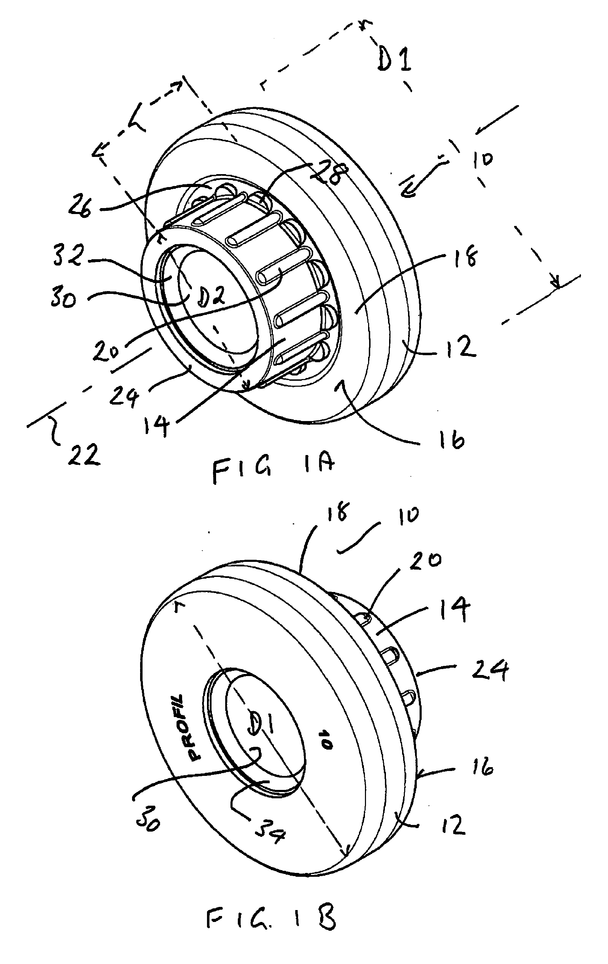

Bezug nehmend auf die Fig. 1A und 1B wird dort ein Einstanzelement 10 gezeigt mit einem hohlen Kopfteil 12 größerer Querabmessung D1, mit einem hohlen Schaftteil 14 kleinerer Querabmessung D2, der von einer Seite 16 des Kopfteils 12 weg ragt, wobei eine ringförmige Blechanlagefläche 18 auf der genannten Seite 16 des Kopfteils 12 ausgebildet ist und den Schaftteil 14 umgibt. Das Einstanzelement 10 ist mit mehreren Rippen 20 am Außenumfang des Schaftteils 14 versehen, die sich in axialer Richtung (mittlere Längsachse 22) entlang des Schaftteils 14 von der Blechanlagefläche 18 bis nahe an das freie Ende 24 des Schaftteils 14 erstrecken. D1 ist beispielsweise - ohne Einschränkung - etwa doppelt so groß wie D2.

Hier erstrecken sich die Rippen ausgehend von der genannten Seite über die volle Länge des Schaftteils 14. Dies ist allerdings nicht zwingend erforderlich, sie könnten sich über mindestens 80 % der gesamten Länge L des Schaftteils erstrecken, und sie könnten beispielsweise und ohne Einschränkung um einen Betrag 0,1L vom Stirnende 24 des Schaftteils 14 zu Ende gehen und um einen Betrag von 0,1L vor der Blechanlagefläche 18 aufhören. Die bevorzugte Konstruktion ist aber aus Fig. 1A ersichtlich, bei der die Längsrippen in einer axialen Ringnut 26 radial innerhalb der Blechanlagefläche 18 zu Ende gehen, wobei Materialanhäufungen 28 sich zwischen den Längsrippen befinden und ebenfalls in der axialen Ringnut 26 enthalten sind. Dies hat herstellungstechnische Vorteile, da die Längsrippen 20 durch Kaltschlagen aus einer Ringschulter eines vorgefertigten Rohlings mit axialer Ringnut derart hergestellt werden, dass Material aus den Bereichen zwischen den Längsrippen mit einem geeigneten Werkzeug weggeschabt wird und zu den Materialansammlungen 28 führt, wie in einer weiteren Anmeldung der vorliegenden Anmelderin beschrieben ist. Diese Auslegung hat den Vorteil, dass sich keine Merkmale, außer dem Schaftteil mit den Längsrippen 20, vor der Blechanlagefläche 18 befinden, so dass die Blechanlagefläche satt an einer Seite eines ersten Blechteils anliegen kann.

Die Rippen 20 sind hier gleichmäßig um den Außenumfang des Schaftteils 14 verteilt angeordnet. Dies ist allerdings nicht zwingend erforderlich.

Der Kopfteil 12 und der Schaftteil 14 sind hier hohl ausgebildet und ein Gewindezylinder 30 ist sowohl im Kopfteil 12 als auch und im Schaftteil 14 ausgebildet. Der Gewindezylinder 30 ist mit einem Gewindeeinlauf 32 und mit einem Gewindeauslauf 34 versehen.

Alternativ hierzu könnte das Einstanzelement derart ausgebildet werden, dass auf der anderen Seite des Kopfteils ein Bolzenschaft mit Außengewinde ausgebildet ist (nicht gezeigt).

Das Einstanzelement 10 wird, wie in den Figuren 2A bis 2E gezeigt, an ein erstes Blechteil 40 zur Bildung einer Vormontagebaueinheit 42 angebracht. Dabei wird das bisher beschriebene Einstanzelement mit dem freien Ende voraus gemäß Fig. 2A von oben kommend so weit in das vorgelochte Blechteil 40 eingepresst, dass ein Endteil 44 des Schaftteils 14 aus dem Blechteil 40 herausragt. Dabei werden mit Hilfe einer Matrize 50, die später näher beschrieben wird, einige aber nicht alle der Längsrippen 20 vom Endteil 44 des Schaftteils 14 voll oder teilweise weggeschabt und zu Materialnasen 52 umgeformt, d.h. abgeschert und gestaucht, die in Fig. 2D und 2E ersichtlich sind. Die Materialnasen 52 greifen radial in das Material des Blechteils 40 voll oder teilweise ein, und zwar derart, dass das Blechteil 40 zwischen den Nasen und der Blechanlagefläche 18 eingeklemmt ist. Die restlichen nicht weggeschabten Längsrippen 20 sind, wie ebenfalls aus den Fig. 2D und 2E ersichtlich, noch am Endteil vorhanden.

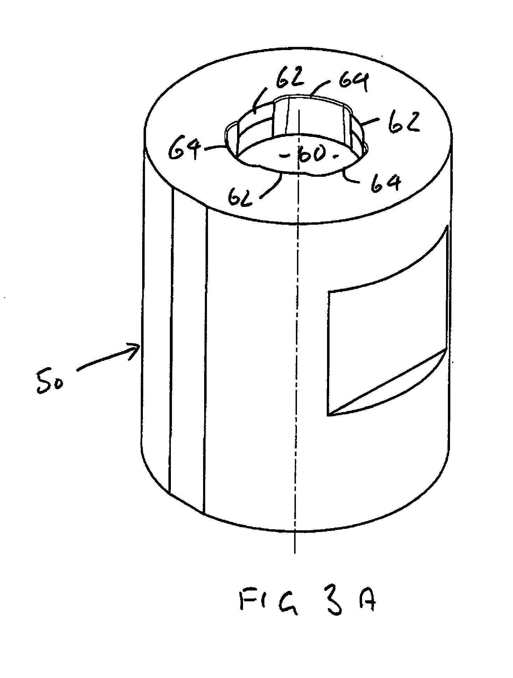

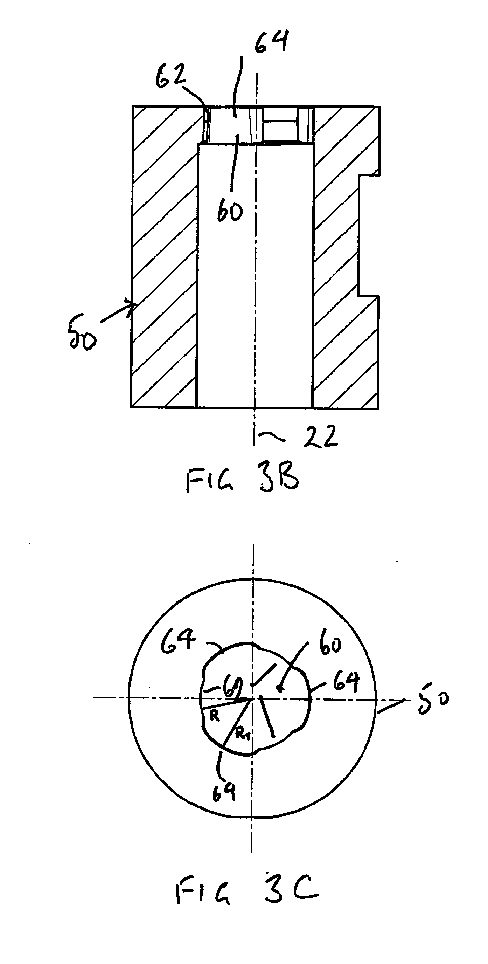

Das Verfahren zum Herstellen des Vormontagebauteils läuft somit wie folgt ab: Das erste Blechteil 40, beispielsweise ein Schiff wie oben erläutert, wird zunächst vorgelocht mit einem Lochdurchmesser der im Wesentlichen dem Durchmesser D2 des Schaftteils entspricht, d.h. mit einem Radius D2/2, der aber auch geringfügig kleiner oder größer sein kann. Das Blechteil 40 wird anschließend auf der eine Passage 60 aufweisende Matrize 50 abgestützt, die in den Fig. 3A bis 3C gezeigt ist. Die Passage 60 weist mindestens erste und zweite abwechselnde Bereiche 62 bzw. 64 um ihren Umfang herum auf, wobei die ersten Bereiche 62 einen Radius D2/2 von der mittleren Längsachse 22 des Einstanzelements 10 aufweisen, der dem Radius D2/2 des Schaftteils 14 entspricht. Die zweiten Bereiche 64 weisen einen Radius von der mittleren Längsachse 22 des Einstanzelements 10 auf, der dem Radius Rr der Außenseiten der Längsrippen 20 von der mittleren Längsachse 22 des Einstanzelements 10 entspricht.

Die Gesamtanzahl der kleineren Bereiche 62 und der größeren Bereiche 34 entspricht etwa der Hälfte der Gesamtzahl von Längsrippen 20, so dass die Längsrippen 20 paarweise um die Bereiche 62 weggeschabt werden, während weitere abwechselnde Paare von Längsrippen mit den größeren Bereichen 64 fluchten und nicht abgeschält werden. Eine besondere Orientierung der Matrize oder des Einstanzelements ist nicht erforderlich. Selbst wenn - aufgrund einer ungünstigen Orientierung - ein Bereich 62 kleineren Radius mit beispielsweise drei Längsrippen fluchten soll, wird sie die mittlere Längsrippe voll und die zwei benachbarten Längsrippen 20 zur Hälfte wegschaben, was nicht weiter tragisch ist, da auch hier genügend Materialnasen 52 und genügend Längsrippenreste (voll oder teilweise) vorliegen, um die erforderliche Verdrehsicherung sicherzustellen.

Bei dieser Ausführung werden somit mittels der Matrize 50 jeweils zwei benachbarte Längsrippen 20 umformt und, da bei den nächsten Rippen in Umfangsrichtung die Matrize 50 eine Aussparung (Bereich 64) aufweist, so dass die Längsrippen 20 hier nicht umgeformt werden. Für diese Anordnung ist keine Orientierung in Drehrichtung erforderlich, da nur jeweils die Hälfte aller Rippen betroffen ist. Selbst wenn die Matrize zufällig so orientiert ist, dass der Übergang von Umformen auf Nicht-Umformen im Bereich einer Rippe zu liegen kommt, entstehen halt zwei halb umgeformte und eine voll umgeformte Rippe.

Es ist allerdings keinesfalls erforderlich, ein bestimmtes Verhältnis zwischen Gesamtzahl der Bereiche 62 oder 64 zu der Gesamtzahl der Längsrippen einzuhalten, oder gleiche Winkelerstreckungen der Bereiche 62, 64 zu wählen. Es muss nur darauf geachtet werden, dass eine ausreichende Zahl von Materialnasen 52 und eine ausreichende Zahl von verbleibenden Längsrippen oder Längsrippenteile am Endteil 44 verbleiben, um die erwünschte Verdrehsicherung zu gewährleisten.

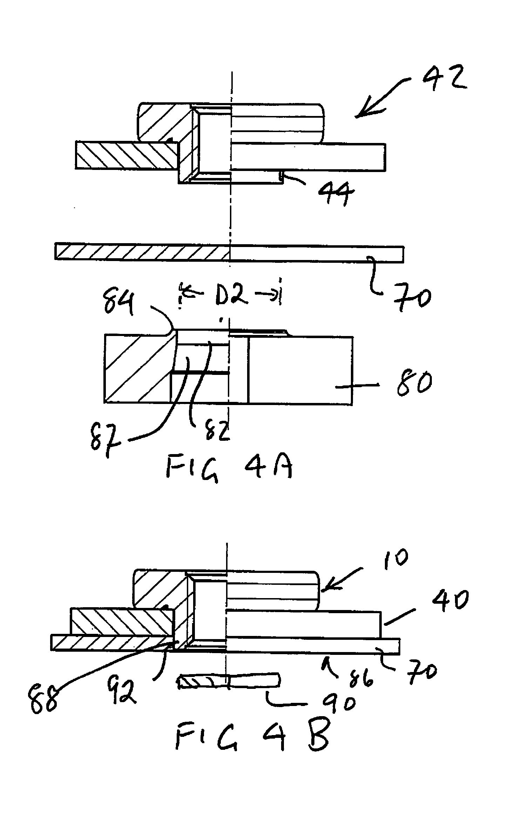

Das Verfahren zum Herstellen eines Zusammenbauteils 70 bestehend aus dem oben beschriebenen Vormontagebauteil 42 und einem zweiten Blechteil 70 wird nunmehr anhand der Fig. 4A und 4B beschrieben. Hier wird in Fig. 4A das zweite nicht vorgelochte Blechteil 70 auf einer zweiten Matrize 80 abgestützt. Diese weist eine mittlere Passage 82 mit einem Durchmesser D2 entsprechend dem Grunddurchmesser D2 des Endteils 44 des Schaftteils 14 des Einstanzelements 10 sowie eine um die mittlere Passage 82 herum angeordnete Ringnase 84 auf. Durch Drücken der Vormontageeinheit 42 mit dem Stirnende 24 des Endteils 44 voran gegen die der Matrize 80 abgewandten Seite 86 des zweiten Blechteils 70 erzeugt das Endteil 44 mit Hilfe der Matrize 80 ein Loch 88 im zweiten Blechteil und einen Stanzbutzen 90, der durch den erweiterten Bereich 87 der Matrize 80 hindurchfällt und entsorgt wird. Die Ringnase 84 erzeugt eine Ringvertiefung 92 in der dem Kopfteil 12 abgewandten Seite 94 des zweiten Blechteils 70 um das Endteil 44 herum. Die Ringvertiefung 92, die in der dem ersten Blechteil 40 abgewandten Seite des zweiten Blechteils 70 vorgesehen ist, umgibt somit das Endteil 44.

Die noch verbleibenden Längsrippen 20 am Endteil 44 des Schaftteils 14 bilden Furchen (nicht ersichtlich) in der Seitenwand des Loches 88, die durch den entsprechenden Formschluss mit den Längsrippen für eine gute Verdrehsicherung sorgen. Dies wird durch die Lochlaibung erhöht bzw. ergänzt, und die Lochlaibung sorgt auch für einen erheblichen Auspresswiderstand. Die Ringvertiefung 92 erhöht die Lochlaibung und kann auch zu einem kleinen, aber hochwirksamen weiteren Formschluss mit dem Schaftteil 14 im Bereich seines Endteils 44 führen, der den Auspresswiderstand weiter erhöht. Das Schaftteil 14 ist aber mindestens im Bereich des Gewindes 30 zumindest im Wesentlichen nicht verformt.

Das Ergebnis dieses Verfahrens ist das Zusammenbauteil 100 gemäß der Fig. 4B bestehend aus dem Vormontagebauteil 42 und dem zweiten Blechteil 70. Rein beispielhaft könnte das erste Blechteil 40 eine Dicke im Bereich von 2,0 bis 4 mm oder größer aufweisen, während das zweite Blechteil eine Dicke von 0,6 bis 1,8 mm aufweisen kann, wobei diese Werte nicht als einschränkend zu verstehen sind.

Als Material für das Einstanzelement kommen - ohne Einschränkung - alle Materialien in Frage, die imstande sind, ein Verbindungselement der Festigkeitsklasse 8.8 oder hoher gemäß DIN-Norm zu erfüllen.

## Patentansprüche

1. Vormontagebauteil, das zumindest ein Blechteil (40) umfasst, in das zumindest ein Einstanzelement (10) mit einem hohlen Kopfteil (12) größerer Querabmessung (D1), mit einem hohlen Schaftteil (14) kleinerer Querabmessung (D2), der von einer Seite (16) des Kopfteils (12) weg ragt, wobei eine ringförmige Blechanlagefläche (18) auf der genannten Seite (16) des Kopfteils (12) ausgebildet ist und den Schaftteil (14) umgibt, und mit mehreren Rippen (20) am Außenumfang des Schaftteils (14), die sich in axialer Richtung (22) entlang des Schaftteils (14) von der Blechanlagefläche (18) bis nahe an das freie Ende (24) des Schaftteils (14) erstrecken, mit seinem freien Ende (24) voraus so weit im vorgelochten Blechteil (40) eingepresst ist, dass ein Endteil (44) des Schaftteils (14) aus dem Blechteil herausragt **dadurch gekennzeichnet, dass** einige aber nicht alle der Längsrippen (20) vom Endteil (44) des Schaftteils (14) voll oder teilweise weggeschabt und zu Materialnasen (52) umgeformt sind, d.h. abgeschert und gestaucht wurden, wobei die Materialnasen (52) radial in das Material des Blechteils (40) voll oder teilweise eingreifen oder an dem Blechteil anliegen und das Blechteil (40) zwischen den Nasen(52) und der Blechanlagefläche (18) eingeklemmt ist und dass die restlichen nicht weggeschabten Längsrippen (20) noch am Endteil (44) vorhanden sind.

2. Vormontagebauteil nach Anspruch 1,
**dadurch gekennzeichnet, dass**
sich die nicht weggeschabten Rippen (20) des Einstanzelements ausgehend von der genannten Seite (16) über mindestens 80 % der gesamten Länge des Schaftteils erstrecken.

3. Vormontagebauteil nach Anspruch 1 oder 2,
**dadurch gekennzeichnet, dass**
die Rippen (20) gleichmäßig verteilt um den Außenumfang des Schaftteils (14) angeordnet sind.

4. Vormontagebauteil nach zumindest einem der vorstehenden Ansprüche,
**dadurch gekennzeichnet, dass**
sowohl der Kopfteil (12) als auch der Schaftteil (14) des Einstanzelements hohl ausgebildet sind und dass ein Gewindezylinder (30) im Kopfteil und im Schaftteil ausgebildet ist.

5. Vormontagebauteil nach einem der Ansprüche 1 bis 3,
**dadurch gekennzeichnet, dass**
auf der anderen Seite des Kopfteils des Einstanzelements ein Bolzenschaft mit Außengewinde ausgebildet ist.

6. Zusammenbauteil bestehend aus dem Vormontagebauteil (42) nach zumindest einem der Ansprüche 1 bis 5 und einem zweiten Blechteil (70),
**dadurch gekennzeichnet, dass**
das Endteil (44) selbststanzend in das zweite Blechteil (70) mit Ausbildung eines Loches (88) im zweiten Blechteil eingebracht ist,
wodurch die restlichen nicht weggeschabten Längsrippen (20), die noch am Endteil (44) vorhanden sind, formschlüssig in Furchen des Lochrandes eingreifen.

7. Zusammenbauteil nach Anspruch 6,
**dadurch gekennzeichnet, dass**
eine Ringvertiefung (92) in der dem ersten Blechteil (40) abgewandten Seite (86) des zweiten Blechteils (70) vorgesehen ist, die das Endteil (44) umgibt.

8. Zusammenbauteil nach einem der Ansprüche 6 oder 7,
dadurch **gekennzeicnet**, dass
das Schaftteil (14) mindestens im Bereich des Gewindes (30) zumindest im Wesentlichen nicht verformt ist.

9. Verfahren zum Herstellen eines Vormontagebauteils (42) bestehend aus einem Blechteil (40) und einem Einstanzelement (10) mit einem hohlen Kopfteil (12) größerer Querabmessung (D1), mit einem hohlen Schaftteil (14) kleinerer Querabmessung (D2), der von einer Seite (16) des Kopfteils weg ragt, wobei eine ringförmige Blechanlagefläche (18) auf der genannten Seite des Kopfteils (12) ausgebildet ist und den Schaftteil umgibt, mit mehreren Rippen (20) am Außenumfang des Schaftteils (14), die sich in axialer Richtung (22) entlang des Schaftteils von der Blechanlagefläche (18) bis nahe an das freie Ende (24) des Schaftteils (14) erstrecken, wobei das Blechteil vorgelocht wird mit einem Lochdurchmesser D2, der dem Durchmesser D2 des Schaftteils entspricht, dass das Blechteil auf einer eine Passage (60) aufweisenden Matrize (50) abgestützt wird, die mindestens erste und zweite abwechselnde Bereiche (62, 64) um die Passage (60) herum aufweist, wobei die ersten Bereiche (62) einen Radius (R) von der mittleren Längsachse (22) des Einstanzelements (10) aufweisen, der dem Radius (D2/2) des Schaftteils (14) entspricht, und die zweiten Bereiche einen Radius (Rr) von der mittleren Längsachse (22) des Einstanzelements (10) aufweisen, der dem Radius (Rr) der Außenseiten der Längsrippen (20) von der mittleren Längsachse (22) des Einstanzelements (10) entspricht.

10. Verfahren zum Herstellen eines Zusammenbauteils (100) bestehend aus dem gemäß Anspruch 9 hergestellten Vormontagebauteil (42) und einem zweiten Blechteil (70), wobei das zweite nicht vorgelochte Blechteil auf einer Matrize(80) abgestützt wird mit einer mittleren Passage (82) mit einem Durchmesser (D2) entsprechend dem Grunddurchmesser (D2) des Endteils (44) des Schaftteils (14) des Einstanzelements (10) und mit einer um die mittlere Passage herum angeordneten Ringnase (84), wobei durch Drücken der Vormontageeinheit (42) mit dem Stirnende(24) des Endteils (44) voran gegen die der Matrize (80) abgewandten Seite des zweiten Blechteils (70) das Endteil (44) mit Hilfe der Matrize (80) ein Loch im zweiten Blechteil und einen Stanzbutzen (90) erzeugt, und die Ringnase (84) eine Ringvertiefung (92) in der dem Kopfteil (12) abgewandten Seite (86) des zweiten Blechteils (70) um das Endteil (44) herum erzeugt.

## Claims

1. A pre-installation component which includes at least one sheet metal part (40) into which at least one punch-in element (10) has been pressed, the punch-in element having a hollow head part (12) of larger transverse dimension (D1) with a hollow shaft part (14) of smaller transverse dimension (D2) which projects away from one side (16) of the head part (12), wherein a ring-like sheet metal contact surface (18) is formed at the said side (16) of the head part (12) and surrounds the shaft part (14), and with a plurality of ribs (20) at the outer periphery of the shaft part (14) which extend in the axial direction (22) along the shaft part (14) from the sheet metal contact surface (18) to close to the free end (24) of the shaft part (14), the punch-in element having been pressed with its front end (24) to the fore into the pre-pierced sheet metal part (40), to such an extent that an end part (44) of the shaft part (14) projects out of the sheet metal part, **characterized in that** some but not all of the longitudinal ribs (20) are fully or partly displaced from the end part (44) of the shaft part (14) and reshaped into material noses (52), i.e. are sheared and compressed, with the material noses (52) engaging radially into the material of the sheet metal part (40) fully or partly or contacting the sheet metal part and the sheet metal part (40) being clamped between the noses (52) and the sheet metal contact surface (18) and wherein the remaining non-displaced longitudinal ribs (20) are still present at the end part (44).

2. A pre-installation component in accordance with claim 1,
**characterized in that**
the non-displaced ribs (20) of the punch-in element extend, starting from the said side (16), over at least 80 % of the total length of the shaft part.

3. A pre-installation component in accordance with claim 1 or claim 2,
**characterized in that**
the ribs (20) are uniformly distributed around the outer periphery of the shaft part (14).

4. A pre-installation component in accordance with at least one of the preceding claims,
**characterized in that**
both the head part (12) and also the shaft part (14) of the punch-in element are of hollow design and **in that** a thread cylinder (30) is formed in the head part and in the shaft part.

5. A pre-installation component in accordance with any one of the claims 1 to 3,
**characterized in that**
a bolt shaft with an external thread is formed at the other side of the head part of the punch-in element.

6. A component assembly comprising the pre-installation component (42) in accordance with at least one of the claims 1 to 5 and a second sheet metal part (70),
**characterized in that**
the end part (44) is introduced in a self-piercing manner into the second sheet metal part (70) with the formation of a hole (88) in the second sheet metal part, whereby the remaining non-displaced longitudinal ribs (20) which are still present at the end part (44) engage in form-fitted manner in grooves of the hole rim.

7. A component assembly in accordance with claim 6,
**characterized in that**
a ring recess (92) is provided in the side (86) of the second sheet metal part (70) remote from the first sheet metal part (40) and surrounds the end part (44).

8. A component assembly in accordance with one of the claims 6 or 7,
**characterized in that**
the shaft part (14) is at least substantially not deformed in the area of the thread (30).

9. A method for the manufacture of a pre-installation component (42) consisting of a sheet metal part (40) and a punch-in element (10) having a hollow head part (12) of larger transverse dimension (D1) and a hollow shaft part (14) of smaller transverse dimension (D2) which projects away from one side (16) of the head part, wherein a ring-like sheet metal contact surface (18) is formed at the said side of the head part (12) and surrounds the shaft part, with a plurality of ribs (20) at the outer periphery of the shaft part (14) which extend in an axial direction (22) along the shaft part from the sheet metal contact surface (18) up to close to the free end (24) of the shaft part (14), wherein the sheet metal part is pre-pierced with a hole diameter D2 which corresponds to the diameter D2 of the shaft part; in that the sheet metal part is supported on a die button (50) having a passage (60), the die button having at least first and second alternating regions (62, 64) around the passage (60), with the first regions (62) having a radius (R) from the central longitudinal axis (22) of the punch-in element (10) which corresponds to the radius (D2/2) of the shaft part (14) and the second regions having a radius (Rr) from the central longitudinal axis (22) of the punch-in element (10) which corresponds to the radius (Rr) of the outer sides of the longitudinal ribs (20) from the central longitudinal axis (22) of the punch-in element (10).

10. A method for the manufacture of a component assembly (100) consisting of the pre-installation component (42) manufactured in accordance with claim 9 and a second sheet metal part (70), wherein the second not pre-pierced sheet metal part is supported on a die button (80) having a central passage (82) with a diameter (D2) corresponding to a base diameter (D2) of the end part (44) of the shaft part (14) of the punch-in element (10) and with a ring nose (84) arranged around the central passage, wherein, by pressing the pre-installation unit (42) with the free end (24) of the end part (44) to the fore against the side of the second sheet metal part (70) remote from the die button (80), the end part (44) generates a hole in the second sheet metal part and a piercing slug (90) with the aid of the die button (80) and the ring nose (84) forms a ring recess (92) in the side (86) of the second sheet metal part (70) remote from the head part (12) around the end part (44).

## Revendications

1. Composant de prémontage, qui inclut au moins une pièce en tôle (40) dans laquelle au moins un élément de poinçonnage (10), qui comporte une partie de tête creuse (12) de plus grande dimension transversale (D1), qui comporte une partie de tige creuse (14) de plus petite dimension transversale (D2) et qui dépasse en éloignement d'un côté (16) de la partie de tête (12), de sorte qu'une surface d'appui de tôle de forme annulaire (12) est réalisée sur le côté précité (16) de la partie de tête (12) et entoure la partie de tige (14), et qui comporte plusieurs nervures (20) à la périphérie extérieure de la partie de tige (14), lesquelles s'étendent en direction axiale (22) le long de la partie de tige (14) depuis la surface d'appui de tôle (18) jusqu'à proximité de l'extrémité libre (24) de la partie de tige (14), est enfoncé par pressage avec son extrémité libre (24) en avant et aussi loin dans la pièce en tôle prépercée (40) qu'une partie terminale (44) de la partie de tige (14) dépasse hors de la pièce en tôle,
**caractérisé en ce que** quelques-unes, mais pas toutes les nervures longitudinales (20) sont éliminées entièrement ou partiellement par raclage depuis la partie terminale (44) de la partie de tige (14) et sont déformées pour donner des ergots de matière (52), c'est-à-dire qu'elles sont cisaillées et écrasées, dans lequel les ergots de matière (52) s'engagent entièrement ou partiellement radialement dans le matériau de la partie de tôle (40), ou s'appliquent contre la partie de tôle, et la pièce en tôle (40) est serrée entre les ergots (52) et la surface d'appui de tôle (18), et **en ce que** les nervures longitudinales restantes qui n'ont pas été raclées (20) sont encore présentes au niveau de la partie terminale (44).

2. Composant de prémontage selon la revendication 1,
**caractérisé en ce que** les nervures (20) qui n'ont pas été raclées de l'élément de poinçonnage s'étendent, en partant du côté précité (16), sur au moins 80 % de la longueur totale de la partie de tige.

3. Composant de prémontage selon la revendication 1 ou 2,
**caractérisé en ce que** les nervures (20) sont agencées en étant réparties régulièrement autour de la périphérie extérieure de la partie de tige (14).

4. Composant de prémontage selon l'une au moins des revendications précédentes,
**caractérisé en ce que** la partie de tête (12) tout comme la partie de tige (14) de l'élément de poinçonnage sont réalisées creuses, et **en ce qu'**un cylindre à pas de vis (30) est réalisé dans la partie de tête et dans la partie de tige.

5. Composant de prémontage selon l'une des revendications 1 à 3,
**caractérisé en ce qu'**une tige de boulon avec pas de vis extérieur est réalisée sur l'autre côté de la partie de tête de l'élément de poinçonnage.

6. Assemblage de composants, constitué d'un composant de prémontage (42) selon l'une au moins des revendications 1 à 5, et d'une seconde pièce en tôle (70),
**caractérisé en ce que** la partie terminale (44) est introduite dans la seconde pièce en tôle (70) par autopoinçonnage en réalisant un trou (88) dans la seconde pièce en tôle,
grâce à quoi les nervures longitudinales restantes qui n'ont pas été raclées (20) et qui sont encore présentes au niveau de la partie terminale (44) s'engagent par coopération de formes dans des sillons de la bordure du trou.

7. Assemblage de composants selon la revendication 6,
**caractérisé en ce qu'**il est prévu un renfoncement annulaire (92), dans lequel se présente le côté (86), détourné de la première pièce en tôle (40), de la seconde pièce en tôle (70), et qui entoure la partie terminale (44).

8. Assemblage de composants selon l'une des revendications 6 ou 7,
**caractérisé en ce que** la partie de tige (14) n'est au moins sensiblement pas déformée, au moins dans la région du pas de vis (30).

9. Procédé pour fabriquer un composant de prémontage (42), constitué d'une pièce en tôle (40) et d'un élément de poinçonnage (10) avec une partie de tête creuse (12) de plus grande dimension transversale (D1), avec une partie de tige creuse (14) de plus petite dimension transversale (D2), qui dépasse en éloignement depuis un côté (16) de la partie de tête, dans lequel une surface d'appui de tôle (18) de forme annulaire est réalisée sur le côté précité de la partie de tête (12) et entoure la partie de tige, comportant plusieurs nervures (20) à la périphérie extérieure de la partie de tige (14), lesquelles s'étendent en direction axiale (22) le long de la partie de tige depuis la surface d'appui de tôle (18) jusqu'à proximité de l'extrémité libre (24) de la partie de tige (14), dans lequel la pièce en tôle est prépercée avec un trou d'un diamètre D2 qui correspond au diamètre D2 de la partie de tige (14), de sorte que la pièce en tôle est soutenue sur une matrice (50) qui présente un passage (60) et qui comporte tout autour du passage (60) au moins des premières et des secondes de zones alternées (62, 64), dans lequel les premières zones (62) présentent un rayon (R), depuis l'axe longitudinal médian (22) de l'élément de poinçonnage (10), qui correspond au rayon (D2/2) de la partie de tige (14), et les secondes zones présentent un rayon (Rr) depuis l'axe longitudinal médian (22) de l'élément de poinçonnage (10) qui correspond au rayon (Rr) des faces extérieures des nervures longitudinales (20) depuis l'axe longitudinal médian (22) de l'élément de poinçonnage (10).

10. Procédé pour fabriquer un assemblage de composants (100) constitué du composant de prémontage (42) fabriqué conformément à la revendication 9, et d'une seconde pièce en tôle (70), dans lequel la seconde pièce en tôle qui n'est pas prépercée est soutenue sur une matrice (80), et est doté d'un passage médian (82) avec un diamètre (D2) correspondant au diamètre de base (D2 de la partie terminale (44) de la partie de tige (14) de l'élément de poinçonnage (10), et comporte un ergot annulaire (84) agencé tout autour du passage médian, dans lequel en pressant l'unité de prémontage (42) avec l'extrémité frontale (24) de la partie terminale (44) en avant contre le côté, détourné de la matrice (80), de la seconde pièce en tôle (70), la partie terminale (44) engendre, avec l'aide de la matrice (80), un trou dans la seconde pièce en tôle et une pastille de poinçonnage (90), et l'ergot annulaire (84) engendre un renfoncement annulaire (92), tout autour de la partie terminale (44), dans le côté (86) de la seconde pièce en tôle (70) détourné de la partie de tête (12).
